(19) Europäisches Patentamt
European Patent Office
Office européen des brevets

(11) **EP 1 215 169 B1**

(12) **EUROPEAN PATENT SPECIFICATION**

(45) Date of publication and mention
of the grant of the patent:
**29.03.2006 Bulletin 2006/13**

(51) Int Cl.:
***C01B 21/083*** (2006.01)

(21) Application number: **01650148.8**

(22) Date of filing: **13.12.2001**

(54) **Method and apparatus for the production of nitrogen trifluoride**

Verfahren und Vorrichtung zur Herstellung von Stickstofftrifluorid

Procédé et dispositif pour la production de trifluorure d'azote

(84) Designated Contracting States:
**AT BE CH CY DE DK ES FI FR GB GR IE IT LI LU MC NL PT SE TR**

(30) Priority: **14.12.2000 US 737191**

(43) Date of publication of application:
**19.06.2002 Bulletin 2002/25**

(73) Proprietors:
  • **THE BOC GROUP, INC.**
    **New Providence, New Jersey 07974 (US)**
  • **The South African Nuclear Energy Corporation Limited**
    **Pretoria (ZA)**

(72) Inventors:
  • **Satchell, Donald Prentice, Jr.**
    **Berkeley Heights,**
    **New Jersey 07922-1268 (US)**
  • **Le Roux, Johannes Petrus**
    **Moreleta Park,**
    **Pretoria (ZA)**

(74) Representative: **Coyle, Philip Aidan et al**
    **F. R. KELLY & CO.**
    **27 Clyde Road**
    **Ballsbridge**
    **Dublin 4 (IE)**

(56) References cited:
  **EP-A- 0 959 040**          **US-A- 4 091 081**
  **US-A- 5 637 285**

**Description**

FIELD OF THE INVENTION

The present invention is directed to a process and apparatus for the production of nitrogen trifluoride and hydrogen fluoride from ammonia and elemental fluorine using an ammonium acid fluoride melt intermediate.

BACKGROUND OF THE INVENTION

Nitrogen trifluoride can be produced by the gas phase reaction of ammonia and fluorine. Reaction 1 illustrates the desired gas phase $NF_3$ production reaction.

$$3F_2(g) + NH_3(g) \rightarrow NF_3(g) + 3HF(g) \ (\triangle H = -904KJ/g \ mole \ NF_3) \qquad \text{Reaction 1}$$

wherein (g) denotes the gas phase. A solid catalyst is often used to lower the required operating temperature, which increases the $NF_3$ yield. However, it is very difficult to control the reactor temperature with this highly exothermic reaction. As a result, the gas phase ammonia and fluorine reaction produces substantial quantities of HF, $N_2$, $N_2F_2$, and $NH_4F$, with $NF_3$ yields typically substantially less than ten percent.

United States Patent No. 4,091,081 teaches a higher-yield process that produces nitrogen trifluoride [$NF_3$] and by-product ammonium acid fluoride [$NH_4F(HF)x$] by contacting a molten ammonium acid fluoride [$NH_4F(HF)x$] with gaseous fluorine [$F_2$] and ammonia [$NH_3$]. U.S. Patent No. 5,637,285 describes a similar process, wherein yield is further increased by utilizing a high level of mixing intensity and an ammonium acid fluoride having a $HF/NH_3$ molar ratio greater than 2.55 (equivalent to a melt acidity x value of greater than 1.55). However, the process described in the '285 patent is undesirable for several reasons. The process disclosed in the '285 patent produces an ammonium acid fluoride waste stream, thereby creating disposal problems. Further, it is difficult to maintain the $HF/NH_3$ molar ratio or x value of the bulk ammonium acid fluoride [$NH_4F(HF)x$] at the desired level. There remains a need in the art for a high yield process for producing nitrogen trifluoride without the above-mentioned drawbacks.

SUMMARY OF THE INVENTION

The present invention provides a method and apparatus for producing nitrogen trifluoride using an ammonium acid fluoride melt intermediate without requiring precise control of the melt acidity value. The present invention comprises contacting a fluorine-containing feed stream with liquid ammonium acid fluoride, for example having the acid-base stoichiometery $NH_4F(HF)_x$, wherein x is the melt acidity value, in a reaction zone for a time and under conditions sufficient to produce nitrogen trifluoride. During the contacting step, the effective melt acidity value of the liquid ammonium acid fluoride contacting the gaseous feed is decreased, while the bulk melt acidity value is held roughly constant. Preferably, the effective melt acidity value is decreased from a value above the optimum value resulting in the highest nitrogen trifluoride yield at the reaction zone operating conditions to approximately the optimum value. A reaction product stream comprising nitrogen trifluoride is removed from the reaction zone. In this manner, production of the undesirable by-product nitrogen is suppressed without sacrificing yield or requiring precise control of the bulk melt acidity x value at a single value.

One method of decreasing the effective melt acidity value during the contacting step is to contact the fluorine-containing feed stream with the liquid ammonium acid fluoride in a series of reactors, wherein each successive reactor contains ammonium acid fluoride having a progressively lower melt acidity value. In a preferred embodiment, the decreasing effective melt acidity value is accomplished by forming a gaseous mixture of elemental fluorine and hydrogen fluoride. The gaseous mixture is contacted with a bulk liquid ammonium acid fluoride in a reaction zone for a time and under conditions sufficient to produce nitrogen trifluoride. Due to the presence of the hydrogen fluoride in the gaseous feed, the initial effective melt acidity value in the reaction zone will be greater than the melt acidity value of the bulk liquid ammonium acid fluoride. In one embodiment, the initial effective melt acidity value is at least about 0.05 greater than the melt acidity value of the bulk liquid ammonium acid fluoride in the reaction zone, preferably at least about 0.1 greater, more preferably at least about 0.3 greater. The bulk liquid ammonium acid fluoride melt acidity value is preferably less than about 1.8, more preferably less than about 1.6.

In one embodiment, a reaction product stream comprising nitrogen trifluoride and entrained liquid ammonium acid fluoride is removed from the above-described reaction zone. The reaction product stream is preferably introduced into a regeneration zone, such as a separate stirred tank, wherein the operating pressure of the regeneration zone is lower than the operating pressure of the reaction zone, causing release of gaseous hydrogen fluoride from the entrained liquid ammonium acid fluoride. A regeneration product stream comprising nitrogen trifluoride and hydrogen fluoride may then be removed from the regeneration zone and introduced into a separation zone in order to separate the hydrogen fluoride from the nitrogen trifluoride. At least a portion of the hydrogen fluoride separated in the separation zone is preferably recycled and vaporized for use in the gaseous feed mixture to the reaction zone.

It is also preferable to recycle liquid ammonium acid fluoride from the regeneration zone to the reaction zone. In one embodiment, the flow rate of recycled liquid ammonium acid fluoride to the reaction zone is sufficient to counteract the highly exothermic heat of reaction of nitrogen trifluoride production. For example, it is desirable for the flow rate of the recycled ammonium acid fluoride to be at least about 1,000 times the stoichiometric flow rate required to react with the fluorine in the feed stream, more preferably at least about 2,000, or even at least about 2,500 times, the stoichiometric flow rate. The recycled liquid ammonium acid fluoride preferably passes through a gas-liquid separation tank in order to separate a gas phase from the liquid ammonium acid fluoride prior to recycling the ammonium acid fluoride to the reaction zone. The gas phase collected in the separation tank is combined with the regeneration product stream.

A makeup stream of ammonium acid fluoride can be introduced into the process of the present invention as needed. The makeup stream may be produced by reacting ammonia with hydrogen fluoride in a second reaction zone. Preferably, the makeup ammonium acid fluoride stream is introduced into the regeneration zone. In one embodiment, the makeup ammonium acid fluoride stream is contacted with the regeneration product stream, for example in a demister, in order to recover entrained ammonium acid fluoride from the regeneration product stream. Alternatively, ammonia may be fed directly to the first reaction zone to produce the ammonium acid fluoride.

The present invention also provides an apparatus for producing nitrogen trifluoride. The apparatus may include a supply of a gaseous mixture of elemental fluorine and hydrogen fluoride and a first reactor in fluid communication with the gaseous mixture supply. The reactor preferably comprises a reaction zone and an outlet, wherein the reaction zone is operatively positioned to contact the gaseous mixture with a bulk liquid ammonium acid fluoride. The apparatus may further include a regenerator in fluid communication with the outlet of the first reactor and comprising a regeneration zone and a product outlet. The regeneration zone is operatively positioned to separate a regeneration product stream comprising nitrogen trifluoride and hydrogen fluoride from liquid ammonium acid fluoride. The apparatus may further include a separator in fluid communication with the product outlet of the regenerator. The separator comprises a gaseous outlet and a liquid outlet, wherein the separator is operatively positioned to separate hydrogen fluoride in liquid form from gaseous nitrogen trifluoride.

## BRIEF DESCRIPTION OF THE DRAWINGS

Having thus described the invention in general terms, reference will now be made to the accompanying drawings, which are not necessarily drawn to scale, and wherein:

Figure 1 is a process flow diagram of an embodiment of the apparatus of the present invention;

Figure 2 is a plot of the estimated $F_2$ reaction distribution ($c_1$, $c_2$, and $c_3$) as a function of the $NH_4F(HF)_x$ melt acidity x value in batch bench scale experiments; and

Figure 3 is a plot of the nitrogen trifluoride yield as a function of the $NH_4F(HF)_x$ melt acidity x value at different hydrogen fluoride partial pressures in the fluorine feed.

## DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

As used herein, the term "ammonium acid fluoride" includes all ammonium poly(hydrogen fluoride) complexes and ammonium fluorometallate poly(hydrogen fluoride) complexes. The ammonium acid fluoride compositions can be generically described by the acid-base stoichiometry of $NH_4M_yF_z(HF)_x$, wherein M is a metal selected from the group consisting of Group IA through VA, Group IB through VIIB and Group VIII of the Periodic Table of Elements or mixtures thereof; y is typically 0-12; z is typically 1-12 and is chosen to maintain the charge neutrality of the complex; and x is the melt acidity value. In a preferred embodiment, y is 0 and z is 1, thus yielding a complex with an acid-base stoichiometry of $NH_4F(HF)_x$. However, other ammonium acid fluoride complexes may be used without departing from the present invention.

A simplified description of the $NF_3$ production process chemistry involved in the present invention is given below. The ammonium acid fluoride melt intermediate, $NH_4F(HF)_x$, wherein x is the melt acidity value, is typically formed by the reaction of gaseous ammonia with either gaseous HF via Reaction 2 below or $NH_4F(HF)_x$ melt via Reaction 3 below.

$$NH_3(g) + (1 + x)\ HF(g) \rightarrow NH_4F(HF)_x\ (\lambda) \qquad \text{Reaction 2}$$

$$NH_3(g) + \alpha NH_4F(HF)_{x+(x+1)/\alpha} (\lambda) \rightarrow (\alpha + 1) NH_4F(HF)_x (\lambda) \quad \text{Reaction 3}$$

wherein $(\lambda)$ denotes a species in the liquid phase.

The ammonium acid fluoride product from either Reaction 2 or 3 can react with a gaseous fluorine feed to produce the desired nitrogen trifluoride product via Reaction 4 below.

$$3c_1 F_2(g) + c_1(\alpha + 1) NH_4F(HF)_x (\lambda) \rightarrow c_1 NF_3(g) + \alpha c_1 NH_4F(HF)_x (\lambda) + c_1 (4 + x) HF(\lambda) \quad \text{Reaction 4}$$

wherein $c_1$ is the fraction of the $F_2$ feed that reacts to produce $NF_3$ and $\alpha$ is the ratio of the $NH_4F(HF)_x (\lambda)$ product rate to its stoichiometric feed rate. The major competing reaction, Reaction 5 below, produces $N_2$ rather than $NF_3$.

$$3c_2 F_2(g) + c_2(\alpha + 2) NH_4F(HF)_x \rightarrow c_2 N_2 + \alpha c_2 NH_4F(HF)_x + c_2 (8 + 2x) HF(\lambda) \quad \text{Reaction 5}$$

wherein $c_2$ is the fraction of the $F_2$ feed that reacts to produce $N_2$.
Alternatively, $F_2$ could pass through the $NF_3$ reactor without reacting as shown below in Reaction 6.

$$c_3 F_2(g) \rightarrow c_3 F_2(g) \quad \text{Reaction 6}$$

wherein $c_3$ is the fraction of the $F_2$ feed that does not react. The above analysis assumes that Reactions 4 to 6 describe all the fluorine reactions ($c_1 + c_2 + c_3 = 1$).

The HF by-product may be removed from the $NH_4F(HF)_x$ melt by vaporization via Reaction 7.

$$c_1 (4 + x) HF(\lambda) + c_2 (8 + 2x) HF(\lambda) \rightarrow c, (4 + x) HF(g) + c_2 (8 + 2x) HF(g) \quad \text{Reaction 7}$$

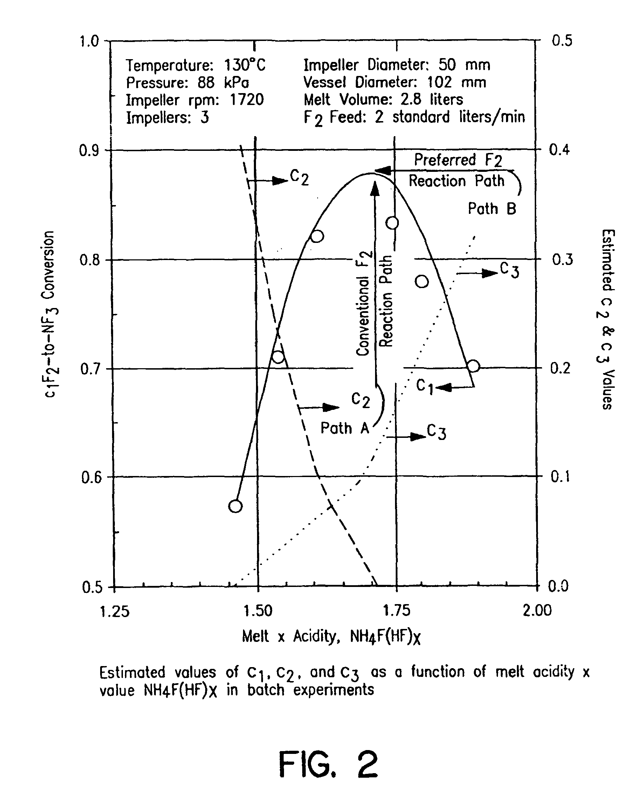

Figure 2 is a plot of the estimated $F_2$ reaction yield distribution ($c_1$, $c_2$, & $c_3$) in bench scale batch $NF_3$ experiments at a given set of process parameters. This analysis indicates that, for $NH_4F(HF)_x$ melt acidity values less than the optimum value (i.e. less than the melt value resulting in the highest yield of $NF_3$), Reaction 5 is primarily responsible for inferior $NF_3$ conversion. For $NH_4F(HF)_x$ melt acidity values greater than the optimum value, unreacted $F_2$ (Reaction 6) is primarily responsible for inferior $NF_3$ conversion.

Figure 2 also illustrates the conventional $F_2$ reaction path **A** and the preferred $F_2$ reaction path **B.** In the approach described in U.S. Patent No. 5,637,285, fluorine is contacted with the $NH_4F(HF)_x$ melt in either a single bubble column or a single stirred tank. Both types of reactors operate at essentially a single $NH_4F(HF)_x$ acidity level, such that the $F_2$ feed is converted to $NF_3$ in the presence of a constant melt acidity value, as shown by path **A**. In contrast, the preferred reaction path **B** initially contacts the fluorine gas with a $NH_4F(HF)_x$ melt having an acidity x value greater than optimum value, which would result in lower fluorine reaction rates, but higher $NF_3$ selectivity, and then subsequently contacts the fluorine with $NH_4F(HF)_x$ melts having progressively lower x acidity values to obtain progressively higher $F_2$ reaction rates with only modest decreases in the $NF_3$ selectivity. With this approach, one could achieve near optimum $NF_3$ conversion without precise knowledge of either the optimum $NH_4F(HF)_x$ melt acidity value or careful control of the bulk $NH_4F(HF)_x$ melt acidity x value.

The present invention provides an efficient method and apparatus for the production of nitrogen trifluoride that utilizes an ammonium acid fluoride intermediate without requiring strict maintenance of the melt acidity value of the bulk ammonium acid fluoride at an optimum setpoint. In the method of the present invention, a fluorine-containing feed stream is contacted with a liquid ammonium acid fluoride, such as $[NH_4F(HF)_x]$, wherein x is the melt acidity value, in a reaction zone for a time and under conditions sufficient to produce nitrogen trifluoride. In order to better emulate the above-described reaction path **B**, the effective melt acidity x value of the liquid ammonium acid fluoride in contact with the fluorine-containing feed stream is decreased during the contacting step. The "effective melt acidity x value" of the liquid ammonium acid fluoride in contact with the fluorine-containing gas bubbles is the melt acidity value that would be in equilibrium with the hydrogen fluoride (HF) partial pressure in the fluorine-containing gas bubbles at the reactor operating conditions (i.e. the reactor temperature and pressure). Preferably, the decreasing step comprises decreasing the effective melt acidity value of the liquid ammonium acid fluoride from a value above the optimum value resulting in the highest nitrogen trifluoride yield at reaction zone conditions to approximately the optimum value. The initial effective melt acidity value is at least about 0.05 greater than the melt acidity value of the bulk liquid ammonium acid fluoride in the reaction zone, preferably at least about 0.1 greater or at least about 0.3 greater. For example, in one embodiment, the acidity value is decreased from an initial value of about 1.8 to about 2.0 to a lower value of about 1.6 to about 1.8.

In one embodiment, the contacting step occurs in a series of reactors or stages, such as stirred tanks or bubble columns, wherein each successive reactor contains ammonium acid fluoride having a progressively lower bulk melt acidity x value. In this embodiment, the fluorine-containing gas is preferably contacted with the ammonium acid fluoride in counter-current flow. As the fluorine-containing gaseous stream leaves a first reactor or stage, the HF partial pressure in the fluorine-containing stream is in equilibrium with the bulk melt acidity x value of the ammonium acid fluoride of the first stage. As a result, the initial effective melt acidity x value of the ammonium acid fluoride in the second stage will be higher than the bulk melt acidity x value of the second stage and so on.

In a preferred embodiment requiring only a single reaction stage, hydrogen fluoride [HF] is added to the elemental fluorine feed, so that, as the gaseous feed mixture initially contacts the liquid bulk ammonium acid fluoride in the reaction zone, the effective melt acidity x value is greater than the bulk ammonium acid fluoride melt acidity x value. The effective melt acidity value of the liquid ammonium acid fluoride in contact with the fluorine-containing gas bubbles decreases as the gas bubbles pass through the reaction zone. As noted above, the effective melt acidity x value of the liquid ammonium acid fluoride in contact with the fluorine-containing gas bubbles is the melt acidity value that would be in equilibrium with the HF partial pressure in the gas bubble at the reactor operating conditions. The initial effective melt acidity x value as the bubble enters the reaction zone is the melt acidity x value that would be in equilibrium with the HF partial pressure in the fluorine-containing feed stream to the reaction zone. By the time the gas bubble exits the reaction zone, the HF partial pressure of the gas bubble is essentially in equilibrium with the bulk melt acidity value. Therefore, the effective melt acidity x value and the bulk melt acidity value are roughly equal as the gas bubble exits the reaction zone. The melt acidity x value of the bulk ammonium acid fluoride is defined as the acidity value of the bulk volume of ammonium acid fluoride contained in the reaction zone. Since the ammonium acid fluoride is typically well-mixed within the reaction zone, the bulk acidity value can be assumed to be uniform throughout the reaction zone. The reaction zone is defined as the site in which the ammonium acid fluoride and the fluorine-containing feed are contacted under conditions capable of producing nitrogen fluoride.

In essence, the addition of hydrogen fluoride to the reactor feed allows each gaseous feed bubble to travel along the preferred reaction path **B** shown in Figure 2. For example, as each $F_2$-HF bubble passes through a bulk ammonium acid fluoride melt having a melt acidity value at or slightly below the optimum level, the effective melt acidity value is initially at or above the optimum acidity value, and then declines as the bubble interacts with the ammonium acid fluoride. By the time the fluorine-containing bubble leaves the reaction zone, the hydrogen fluoride partial pressure within the bubble is essentially in equilibrium with the bulk ammonium acid fluoride melt acidity value. As a result, the effective melt acidity value and the bulk melt acidity value for a bubble leaving the reaction zone are essentially equal.

Equation E1 provides a useful estimate of the effective $NH_4F(HF)_x$ melt acidity x value for a hydrogen fluoride and elemental fluorine containing feed gas.

$$LogP = \frac{\left[\dfrac{x-1}{x}\right] - 0.5559 + 6.642x10^{-3}t}{0.1620 + 1.147x10^{-3}t}$$

$$\text{Equation E1}$$

wherein t is the $NH_4F(HF)_x$ melt temperature in °C, x is melt acidity value, and P is the hydrogen fluoride vapor pressure in mm Hg. One complicating factor is that the actual hydrogen fluoride partial pressure can be a significant function of other reactor zone operating conditions, particularly water content. The hydrogen fluoride partial pressure dramatically decreases with small increases in the ammonium acid fluoride water content. Despite this and other similar limitations, practical experience shows that Equation E1 provides reliable guidance for setting the hydrogen fluoride partial pressure in the elemental fluorine containing feed gas. As noted above, the HF partial pressure in the fluorine feed is set such that the initial effective melt acidity x value of the ammonium acid fluoride is greater than the measured bulk ammonium acid fluoride melt acidity x value.

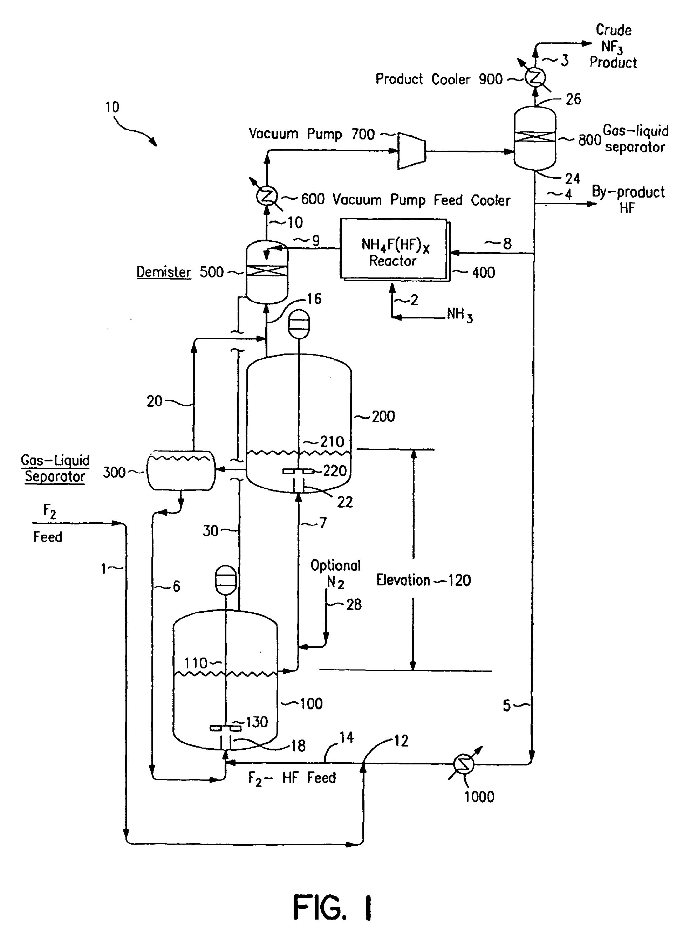

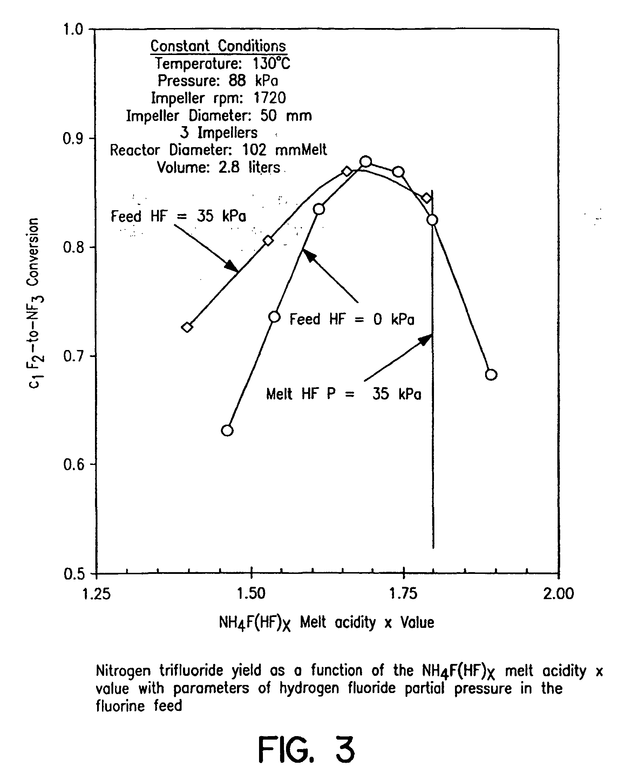

An embodiment of the apparatus **10** of the present invention is illustrated in Figure 1. As noted therein, a feed stream **1** containing elemental fluorine is fed into reactor **100**. The feed flux of stream **1** is typically between about 0.01 and about 0.05 cubic meters per square meter of tank cross-sectional area per second. As noted schematically in Figure 1, the fluorine containing gaseous feed stream **1** is mixed with a gaseous hydrogen fluoride stream at mixing point **12.** Typically, a recycled liquid hydrogen fluoride stream **5** is vaporized using heater **1000** prior to mixing with the fluorine containing feed stream **1.** The resulting gaseous mixture **14** of fluorine and hydrogen fluoride is then directed into reactor **100.** Preferably, the partial pressure of hydrogen fluoride in the gaseous feed mixture **14** is at least about 15 kPa (equivalent to an effective ammonium acid fluoride melt acidity x value of at least about 1.49), more preferably at least about 25 kPa (equivalent to an effective ammonium acid fluoride melt acidity value of at least about 1.67), at a reactor **100** operating temperature of 130°C. In one embodiment, the HF partial pressure in the feed stream **14** is about 15 to about 60 kPa, preferably about 30 to about 50 kPa at the operating conditions of the reactor **100**.

A recycled ammonium acid fluoride [$NH_4F(HF)_x$] stream **6** is also directed into reactor **100**. As shown, although not required, the gaseous feed mixture **14** may be combined with the recycled stream **6** prior to entry into the reactor **100**. In this embodiment, the "reaction zone" will include the portion of the piping leading into the reactor **100** after the two streams are mixed. Alternatively, the two streams, **6** and **14**, could enter the reactor **100** at separate locations. The recycled ammonium acid fluoride stream **6** preferably enters the reactor **100** at a flow rate at least about 1000 times greater than the stoichiometric feed rate, more preferably at least about 2000 times the stoichiometric feed rate, and most preferably greater than about 2500 times the stoichiometric feed rate.

In one embodiment, the ammonium acid fluoride melt entering reactor **100** has a bulk melt acidity value of less than about 1.8, more preferably less than about 1.6. In one embodiment, the bulk melt acidity value in the reactor **100** is about 1.5 or less. As explained above, the presence of the hydrogen fluoride in the gaseous feed stream **14** causes the initial effective melt acidity value of the liquid ammonium acid fluoride contacting the gaseous feed to be higher than the acidity value of the bulk melt material in the reactor **100**. Preferably, the initial effective melt acidity value is at least about 0.05 greater than the melt acidity value of the bulk ammonium acid fluoride in the reactor **100,** more preferably at least about 0.1 greater or at least about 0.3 greater.

Since nitrogen trifluoride yield increases with decreasing temperature until the melting point of the ammonium acid fluoride melt is approached, it is advantageous to operate the reactor **100** at lower temperatures and minimize temperature gradients. Despite the very high exothermic heat of reaction involved in the production of nitrogen trifluoride, the maximum temperature rise in the reactor **100** can be limited to no more than about 4-5°C by using a high ammonium acid fluoride stream **6** flow rate. In addition, the reactor **100,** the regenerator **200** (discussed below) and the interconnecting piping, provide ample surface area for removal of excess heat from the apparatus **10**. Further, if the interconnecting piping between the reactor **100** and regenerator **200** is sized appropriately, the recycled stream **6** flow rate is roughly proportional to the fluorine-containing feed stream **1** flow rate, which, in turn, is roughly proportional to the heat of reaction. Thus, the maximum temperature rise in the reactor **100** will only increase modestly, if at all, with increasing fluorine feed stream **1** flow rate.

The reactor **100** is preferably a stirred tank reactor, although other reactor configurations known in the art, such as bubble columns, may be used. In a preferred embodiment, the reactor **100** includes a turbine or other stirring device known in the art as useful for agitating gas-liquid mixtures. As shown, in one embodiment, the stirring device includes an aeration impeller **130** and a riser **18** to direct the feed streams into the impeller. The power input to the turbine or other stirring device is preferably greater than about 1 kilowatt per cubic meter of ammonium acid fluoride melt, more preferably greater than about 5 kilowatts per cubic meter of melt. The ammonium acid fluoride melt depth in the reactor **100** is preferably greater than about one meter, more preferably greater than about two meters. The reactor **100** preferably operates at a pressure of about 80 to about 200 kPa and a temperature of about 120 to about 150°C.

In one embodiment, a gaseous product bypass line **30** extends from the top of reactor **100** to demister **500** described below or to an intermediate point in between the reactor **100** and the regenerator **200.** The primary purpose of the bypass line **30** is to have the capability to purge the reactor **100** prior to reactor shutdown. In addition, the flow rate in the bypass line **30** can be used, during normal reactor operations, to decrease the recycle ammonium acid fluoride [NH$_4$F(HF)$_x$] stream **6** flow rate and gas flow to the regenerator **200.** The maximum stream **6** flow rate and the maximum gas flow to the regenerator **200** are achieved with no gas flow through the bypass line **30** from the reactor **100** to the demister **500,** which is normally the preferred operating practice. Excessive bypass line **30** flow rates from the reactor **100** to the demister **500** can lead to a decrease in the elevation difference **120** between the reactor melt elevation **110** and regenerator melt elevation **210,** which is undesirable.

A reactor product stream **7** is withdrawn from the reactor **100** and fed to a regenerator **200.** The reaction product stream **7** comprises nitrogen trifluoride, hydrogen fluoride and nitrogen produced in the reactor **100,** as well as entrained ammonium acid fluoride melt and small amounts of unreacted fluorine. The feed flux of the reactor product stream **7** is typically between about 0.1 and about 0.5 cubic meters per square meter of tank cross-sectional area per second. If needed, such as during start-up of the apparatus **10,** a nitrogen stream **28** can be introduced into the reaction product stream **7.**

The regenerator **200** may comprise the same type of agitated tank as the reactor **100.** As with the reactor **100,** the power input to the turbine or other stirring device is preferably greater than about 1 kilowatt per cubic meter of ammonium acid fluoride melt, more preferably greater than about 5 kilowatts per cubic meter of melt. As shown, the stirring device preferably includes an aeration impeller **220** and a riser **22** to direct the feed stream into the impeller.

Regenerator **200** is operated at a lower pressure than the reactor **100.** Preferably, the operating pressure of the regenerator **200** is at least about 50 kPa lower than the operating pressure of the reactor **100.** In one embodiment, the pressure of the regenerator **200** is about 5 to about 20 kPa. The low pressure of the regenerator **200** facilitates release of gaseous hydrogen fluoride from the entrained liquid ammonium acid fluoride that enters regenerator **200.** The operating pressure differential between the reactor **100** and regenerator **200** is preferably achieved by elevating the regenerator **200** above the reactor **100,** such that the pressure of the reactor **100** is the regenerator **200** pressure plus the liquid head pressure that results from the elevation difference. The required height difference **120** between the ammonium acid fluoride melt surface **210** in the regenerator **200** and the melt surface **110** in the reactor **100** needed to reach the desired pressure differential can be estimated using a typical ammonium acid fluoride melt specific gravity of 1.3. Minor adjustments to the ammonium acid fluoride melt inventory in the two tanks, **100** and **200,** could be used to control the melt elevation **210** in the regenerator **200**. In one embodiment, the elevation **120** is at least about 6 meters, more preferably at least about 8 meters. The operating temperature of the regenerator **200** is preferably no more than about 5°C less than reactor **100**.

A regeneration product stream **16** comprising nitrogen trifluoride, hydrogen fluoride, nitrogen and entrained ammonium acid fluoride is removed from the regenerator **200** and fed to a demister **500,** wherein the entrained ammonium acid fluoride is recovered by counter-current contact with a makeup ammonium acid fluoride stream **9**. As will be understood in the art, other types of equipment may be used to separate the entrained liquid from the product stream **16**.

The makeup ammonium acid fluoride is produced in a second reactor **400,** wherein a hydrogen fluoride stream **8** and an ammonia stream **2** are mixed and reacted to form the ammonium acid fluoride melt. Since the reaction is highly exothermic, a cool wall falling film reactor is preferred. Preferably, the melt acidity value of the ammonium acid fluoride stream **9** leaving the second reactor **400** is at least about 1.8, and more preferably at least about 2.0. Use of a relatively high melt acidity value for makeup stream **9** is advantageous because it rapidly decreases the temperature of the regenerator product stream **16,** which minimizes nitrogen trifluoride decomposition. Additionally, higher melt acidity values will allow the second reactor **400** to be cooled with conventional 40°C cooling water.

As noted above, ammonium acid fluoride melt from regenerator **200** is recycled to reactor **100** via stream **6**. Preferably, the recycled ammonium acid fluoride passes through a gas-liquid separator **300,** which provides a quiescent zone conducive for gas/liquid separation. The gaseous stream **20** from gas/liquid separator **300** is preferably combined with regenerator product stream **16** upstream of the demister **500** or fed directly to the demister. The primary purpose of the gas-liquid separator **300** is to create sufficient density difference between streams **6** and **7** so that the preferred ammonium acid fluoride flow rate in stream **6** is achieved. However, significant entrainment of gas in stream **6** can be tolerated in the present invention.

Following removal of the entrained ammonium acid fluoride, a gaseous product stream **10** is removed from the demister **500** and preferably fed through a series of process steps designed to separate the crude nitrogen trifluoride product from hydrogen fluoride. As shown, in one embodiment, the gaseous product stream **10** passes through a vacuum pump feed cooler **600**. Preferably, the vacuum pump feed cooler **600** reduces the temperature of product stream **10** to less than about 50°C. The product stream **10** then passes through a vacuum pump **700,** which preferably comprises a dry vacuum pump with inter-stage cooling. The discharge pressure of the vacuum pump **700** is preferably slightly greater than atmospheric pressure. Thereafter, the product stream **10** enters a gas-liquid separator **800,** which is preferably equipped with a reflux condenser **900**. The separator **800** comprises a gaseous stream outlet **26** and a liquid stream outlet **24**. The crude nitrogen trifluoride stream **3** preferably contains less than about 1% of the hydrogen fluoride found in product stream **10**. This can be achieved using a reflux condenser **900** temperature of about -30°C. The crude product stream 3 may then be purified to produce a salable product using purification techniques known in the art.

As noted in Figure 1, the liquid outlet **24** of the separator **800** is in fluid communication with two hydrogen fluoride streams used in the process, 5 and **8,** thereby allowing the recycle of hydrogen fluoride. In addition, a by-product hydrogen fluoride stream **4** may be removed from the process as needed.

The following procedure may be used to set the operating pressures of the reactor **100** and the regenerator **200** and to control the ammonium acid fluoride melt acidity value. As noted above, it is preferable to operate the reflux condenser **900** at a sufficiently low temperature to recover essentially all of the hydrogen fluoride from product stream **10**. Both the ammonia feed stream **2** flow rate and the by-product hydrogen fluoride stream **4** flow rate can be estimated based on the fluorine feed 1 flow rate and the expected values of $c_1$, $c_2$, and $c_3$ in Reactions 4-6. Then, the pressure in the regenerator **200** may be set to provide reasonable stream **6** and **8** flow rates. As noted above, this generally results in a regenerator **200** pressure in the range of about 5-20 kPa. The periodic measurement of the ammonium acid fluoride melt acidity in either recycle stream **6,** reactor product stream **7** or the reactor **100** or regenerator **200** melt inventory could be used to update the estimated values of $c_1$, $c_2$, and $c_3$ and the flow rates of streams **2** and **4**. Since the hydrogen fluoride inventory in the reactor **100,** regenerator **200** and interconnecting piping is large relative to the by-product stream **4** flow rate, even substantial errors in the estimates for the fluorine feed rate, ammonium feed rate or the values of $c_1$, $c_2$, and $c_3$ would result in a slow change in the ammonium acid fluoride melt acidity values in stream **6** and **7**.

Tables 1-3 below provides a summary of exemplary stream properties for several of the labeled streams in Figure 1.

**Table 1**

| Description | Stream Number | | | |
|---|---|---|---|---|
| | **1** | **2** | **3** | **4** |
| **kg/hr** | | | | |
| F2(g) | 66.12 | - | 1.98 | - |
| NF3(g) | - | - | 31.71 | - |
| N2 (g) | - | - | 3.25 | - |
| NH3(g) | - | 11.56 | - | - |
| NH4HF2(melt) | - | - | - | - |
| HF (g) | 1.30 | - | 1.38 | - |
| HF(l) | - | - | - | 40.65 |
| HF(melt) | - | - | - | - |
| **Total, kg/hr** | 67.42 | 11.56 | 38.33 | 40.65 |
| **T, °C** | 25.0°C | 25.0°C | -30.0°C | -30.0°C |
| **P, kPa** | 144 | 140 | 120 | 120 |
| **x, NH4F(HF)x** | - | - | - | - |
| **Average MW** | 37.35 | 17.03 | 56.04 | 20.01 |

## Table 2

| Description | Stream Number | | | |
|---|---|---|---|---|
| | 5 | 6 | 7 | 8 |
| **kg/hr** | | | | |
| F2(g) | - | - | 1.98 | - |
| NF3(g) | - | - | 31.71 | - |
| N2 (g) | - | - | 3.25 | - |
| NH3(g) | - | - | - | - |
| NH4HF2(melt) | - | 84,052.82 | 84,014.11 | - |
| HF (g) | 14.36 | - | 1.80 | - |
| HF(l) | - | - | - | 45.58 |
| HF(melt) | - | 14,650.88 | 14,732.62 | - |
| Total, kg/hr | 14.36 | 98,703.70 | 98,785.47 | 45.58 |
| T, °C | 25.0°C | 126.0°C | 130.0°C | -30.0°C |
| P, kPa | 144 | 120 | 148 | 120 |
| x, $NH_4F(HF)_x$ | - | 1.497 | 1.500 | - |
| Average MW | 20.01 | 44.75 | 44.70 | 20.01 |

### Table 3

| Description | Stream Number | |
|---|---|---|
| | 9 | 10 |
| **Kg/hr** | | |
| F2(g) | - | 1.98 |
| NF3(g) | - | 31.71 |
| N2 (g) | - | 3.25 |
| NH3(g) | - | - |
| NH4HF2(melt) | 38.71 | - |
| HF (g) | - | 101.98 |
| HF(l) | - | - |
| HF(melt) | 18.43 | - |
| **Total, kg/hr** | 57.14 | 138.92 |
| **T, °C** | 80.0°C | 78.9°C |
| **P, kPa** | 140 | 15 |
| **X, $NH_4F(HF)_x$** | - | - |
| **Average MW** | 35.72 | 24.32 |

EXAMPLE 1

The data in Figure 3 illustrates the usefulness of adding hydrogen fluoride to a fluorine feed. At the reactor operating conditions given in Figure 3, the optimum melt acidity x value is about 1.7. The HF partial pressure of 35 kPa is equivalent to an initial effective melt acidity x value of about 1.8. The data in Figure 3 show that the addition of HF to the $F_2$ feed dramatically decreases the adverse effect of bulk $NH_4F(HF)_x$ melt acidity x values less than the optimum value of 1.7. Above the optimum $NH_4F(HF)_x$ melt acidity x value, the addition of HF to the fluorine feed has a small effect on the relationship between the $NF_3$ conversion and the $NH_4F(HF)_x$ melt acidity value. The optimum performance would be achieved with the initial effective melt acidity value at the optimum bulk melt acidity value. However, one of the advantages of the present invention is that the user can select an initial effective melt acidity x value that is slightly greater than the optimum value and a bulk $NH_4F(HF)_x$ melt acidity value slightly below the optimum value and be assured that $NF_3$ production rate will be much less sensitive to changes in the optimum $NH_4F(HF)_x$ acid value due to undetected changes in reactor operating conditions or excursions in $NH_4F(HF)_x$ acidity value. In addition, the presence of HF in the fluorine feed also improves the reliability and operation of the sparger or other bubbling device by reducing the likelihood of blockage by ammonium acid fluoride.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method of producing nitrogen trifluoride, comprising:

   providing a fluorine-containing feed stream;
   contacting the fluorine-containing feed stream with liquid ammonium acid fluoride in a reaction zone for a time and under conditions sufficient to produce nitrogen trifluoride,
   decreasing the effective melt acidity value of the liquid ammonium acid fluoride during said contacting step; and
   removing a reaction product stream comprising nitrogen trifluoride from the reaction zone.

2. A method according to Claim 1, wherein said contacting step comprises contacting the fluorine-containing feed stream with liquid ammonium acid fluoride in a series of reactors, wherein each successive reactor contains ammonium acid fluoride having a progressively lower bulk melt acidity value.

3. A method according to Claim 1, wherein said decreasing step comprises decreasing the effective melt acidity value of the liquid ammonium acid fluoride from a value above the optimum value resulting in the highest nitrogen trifluoride yield at reaction zone temperature and pressure to approximately the optimum value.

4. A method according to Claim 1, wherein the fluorine-containing feed stream comprises elemental fluorine and hydrogen fluoride.

5. A method according to Claim 1, wherein the ammonium acid fluoride has an acid-base stoichiometry of $NH_4M_yF_z$ $(HF)_x$, wherein M is a metal selected from the group consisting of Group IA through VA, Group IB through VIIB and Group VIII of the Periodic Table of Elements or mixtures thereof; y is 0-12; z is 1-12; and x is the melt acidity value.

6. A method according to claim 1, comprising:

   providing a gaseous mixture of elemental fluorine and hydrogen fluoride;
   feeding the gaseous mixture into a reaction zone containing a bulk ammonium acid fluoride;
   contacting the gaseous mixture with the bulk liquid ammonium acid fluoride for a time and under conditions sufficient to produce nitrogen trifluoride, wherein the initial effective melt acidity value of the ammonium acid fluoride is greater than the melt acidity value of the bulk liquid ammonium acid fluoride; and
   removing a reaction product stream comprising nitrogen trifluoride from the reaction zone.

7. A method according to Claim 6, wherein the initial effective melt acidity value is at least about 0.05 greater than the melt acidity value of the bulk liquid ammonium acid fluoride in the reaction zone.

8. A method according to Claim 6, wherein the bulk liquid ammonium acid fluoride melt acidity value is less than about 1.8.

9. A method according to Claim 6, wherein the initial partial pressure of hydrogen fluoride in the gaseous mixture is at least about 15 kPa at the operating temperature and pressure of the reaction zone.

10. A method according to Claim 6, wherein the operating temperature of the reaction zone is about 120 to about 150°C, and the operating pressure of the reaction zone is about 80 to about 200 kPa.

11. A method according to Claim 6, wherein said contacting step occurs in a stirred tank reactor.

12. A method according to claim 1, comprising:

   providing a gaseous mixture of elemental fluorine and hydrogen fluoride;
   feeding the gaseous mixture into a reaction zone containing a bulk ammonium acid fluoride;
   contacting the gaseous mixture with the bulk liquid ammonium acid fluoride having a bulk melt acidity value of less than about 2.0 for a time and under conditions sufficient to produce nitrogen trifluoride, wherein the initial effective melt acidity value is greater than the melt acidity value of the bulk liquid ammonium acid fluoride, and further wherein the initial partial pressure of hydrogen fluoride in the gaseous mixture is at least about 15 kPa at the operating temperature and pressure of the reaction zone;
   removing a reaction product stream from the reaction zone, the reaction product stream comprising nitrogen trifluoride and entrained liquid ammonium acid fluoride;
introducing the reaction product stream into a regeneration zone, wherein the operating pressure of the regeneration zone is lower than the operating pressure of the reaction zone such that gaseous hydrogen fluoride is released from the entrained liquid ammonium acid fluoride;
removing a regeneration product stream from the regeneration zone, the regeneration product stream comprising nitrogen trifluoride and hydrogen fluoride;
introducing the regeneration product stream into a separation zone to separate hydrogen fluoride from nitrogen trifluoride;
recycling liquid ammonium acid fluoride from the regeneration zone to the reaction zone; and
recycling at least a portion of the hydrogen fluoride separated in the separation zone for use in the gaseous mixture of elemental fluorine and hydrogen fluoride.

## Patentansprüche

1. Verfahren zur Herstellung von Stickstofftrifluorid, das Folgendes umfasst:

   Bereitstellen eines fluorhaltigen Zuflusses;
   Kontaktieren des fluorhaltigen Zuflusses mit flüssigem Ammoniumhydrogenfluorid in einem Reaktionsbereich für einen Zeitraum und unter Bedingungen, die ausreichen, um Stickstofftrifluorid zu erzeugen,
   Verringern des effektiven Schmelzsäurewerts des flüssigen Ammoniumhydrogenfluorids während des Kontaktierungsschritts; und
   Entfernen eines Reaktionsproduktstroms, der Stickstofftrifluorid enthält, aus dem Reaktionsbereich.

2. Verfahren nach Anspruch 1, wobei der Kontaktierungsschritt das Kontaktieren des fluorhaltigen Zuflusses mit flüssigem Ammoniumhydrogenfluorid in einer Reihe von Reaktoren umfasst, und jeder nachfolgende Reaktor Ammoniumhydrogenfluorid enthält, das einen fortschreitend niedrigeren Massenschmelzsäurewert aufweist.

3. Verfahren nach Anspruch 1, wobei der Verringerungsschritt das Verringern des effektiven Schmelzsäurewerts des flüssigen Ammoniumhydrogenfluorids von einem Wert oberhalb des Optimalwerts, der den höchsten Stickstofftrifluoridertrag bei einer Temperatur und einem Druck des Reaktionsbereichs ergibt, auf etwa den Optimalwert umfasst.

4. Verfahren nach Anspruch 1, wobei der fluorhaltige Zufluss elementares Fluor und Fluorwasserstoff umfasst.

5. Verfahren nach Anspruch 1, wobei das Ammoniumhydrogenfluorid eine Säure-Base-Stöchiometrie von $NH_4M_yF_z$ $(HF)_x$ aufweist, wobei M ein Metall ist, das aus der Gruppe ausgewählt wird, die aus Folgendem besteht: Gruppe IA bis VA, Gruppe IB bis VIIB und Gruppe VIII des Periodensystems der Elemente oder Mischungen davon; y 0-12 beträgt; z 1-12 beträgt; und x der Schmelzsäurewert ist.

6. Verfahren nach Anspruch 1, das Folgendes umfasst:

   Bereitstellen eines gasförmigen Gemischs aus elementarem Fluor und Fluorwasserstoff;
   Einleiten des gasförmigen Gemischs in einen Reaktionsbereich, der ein Massenammoniumhydrogenfluorid enthält;
   Kontaktieren des gasförmigen Gemischs mit dem flüssigen Massenammoniumhydrogenfluorid für einen Zeitraum und unter Bedingungen, die ausreichen, um Stickstofftrifluorid zu erzeugen, wobei der anfängliche effektive Schmelzsäurewert des Ammoniumhydrogenfluorids größer als der Schmelzsäurewert des flüssigen Massenammoniumhydrogenfluorids ist; und Entfernen eines Reaktionsproduktstroms, der Stickstofftrifluorid enthält, aus dem Reaktionsbereich.

7. Verfahren nach Anspruch 6, wobei der anfängliche effektive Schmelzsäurewert mindestens um 0,05 größer als der Schmelzsäurewert des flüssigen Massenammoniumhydrogenfluorids in dem Reaktionsbereich ist.

8. Verfahren nach Anspruch 6, wobei der Schmelzsäurewert des flüssigen Massenammoniumhydrogenfluorids geringer als etwa 1,8 ist.

9. Verfahren nach Anspruch 6, wobei der anfängliche Teildruck des Fluorwasserstoffs in dem gasförmigen Gemisch bei der Betriebstemperatur und dem Betriebsdruck des Reaktionsbereichs mindestens etwa 15 kPa beträgt.

10. Verfahren nach Anspruch 6, wobei die Betriebstemperatur des Reaktionsbereichs etwa 120 bis etwa 150° C beträgt und der Betriebsdruck des Reaktionsbereichs etwa 80 bis etwa 200 kPa beträgt.

11. Verfahren nach Anspruch 6, wobei der Kontaktierungsschritt in einem Rührbehälterreaktor stattfindet.

12. Verfahren nach Anspruch 1, das Folgendes umfasst:

Bereitstellen eines gasförmigen Gemischs aus elementarem Fluor und Fluorwasserstoff;

Einleiten des gasförmigen Gemischs in einen Reaktionsbereich, der ein Massenammoniumhydrogenfluorid enthält;

Kontaktieren des gasförmigen Gemischs mit dem flüssigen Massenammoniumhydrogenfluorid, das einen Massenschmelzsäurewert von weniger als etwa 2,0 aufweist, für einen Zeitraum und unter Bedingungen, die ausreichen, um Stickstofftrifluorid zu erzeugen, wobei der anfängliche effektive Schmelzsäurewert größer ist als der Schmelzsäurewert des flüssigen Massenammoniumhydrogenfluorids und der anfängliche Teildruck des Fluorwasserstoffs in dem gasförmigen Gemisch bei der Betriebstemperatur und dem Betriebsdruck des Reaktionsbereichs des Weiteren mindestens etwa 15 kPa beträgt;

Entfernen eines Reaktionsproduktstroms aus dem Reaktionsbereich, wobei der Reaktionsproduktstrom Stickstofftrifluorid und mitgerissenes flüssiges Ammoniumhydrogenfluorid umfasst;

Einleiten des Reaktionsproduktstroms in einen Regenerationbereich, wobei der Betriebsdruck des Regenerationbereichs geringer ist als der Betriebsdruck des Reaktionsbereichs, so dass von dem mitgerissenen flüssigen Ammoniumhydrogenfluorid gasförmiger Fluorwasserstoff freigegeben wird;

Entfernen eines Regenerationsproduktstroms aus dem Regenerationsbereich, wobei der Regenerationsproduktstrom Stickstofftrifluorid und Fluorwasserstoff umfasst;

Einleiten des Regenerationsproduktstroms in einen Trennbereich, um Fluorwasserstoff von Stickstofftrifluorid zu trennen;

Zurückführen von flüssigem Ammoniumhydrogenfluorid vom Regenerationsbereich zum Reaktionsbereich; und

Zurückführen mindestens eines Teils des Fluorwasserstoffs, der im Trennbereich abgesondert wurde, zur Verwendung in dem gasförmigen Gemisch aus elementarem Fluor und Fluorwasserstoff.

**Revendications**

1. Procédé de production du trifluorure d'azote comprenant les étapes consistant à :

approvisionner un flux d'alimentation contenant du fluor ;

mettre en contact le flux d'alimentation contenant du fluor avec du fluorure acide d'ammonium liquide dans une zone réactionnelle pendant un temps suffisant et dans des conditions suffisantes pour produire du trifluorure d'azote ;

diminuer l'indice d'acidité réelle à chaud du fluorure acide d'ammonium liquide au cours de ladite étape de mise en contact ; et

prélever un flux de produit réactionnel comprenant le trifluorure d'azote à partir de la zone réactionnelle.

2. Procédé selon la revendication 1, dans lequel ladite étape de mise en contact comprend la mise en contact du flux d'alimentation contenant du fluor avec du fluorure acide d'ammonium liquide dans une série de réacteurs, dans laquelle chaque réacteur successif contient du fluorure acide d'ammonium ayant un indice d'acidité apparente à chaud progressivement plus faible.

3. Procédé selon la revendication 1, dans lequel ladite étape de diminution comprend la diminution de l'indice d'acidité réelle à chaud du fluorure acide d'ammonium liquide en partant d'un indice situé au-dessus de l'indice optimal conduisant au rendement en trifluorure d'azote le plus élevé à la température et à la pression de la zone réactionnelle jusqu'à approximativement l'indice optimal.

4. Procédé selon la revendication 1, dans lequel le flux d'alimentation contenant du fluor comprend du fluor élémentaire et du fluorure d'hydrogène.

5. Procédé selon la revendication 1, dans lequel le fluorure acide d'ammonium a une stoechiométrie acide/base de

$NH_4M_yF_z(HF)_x$, où M représente un métal choisi dans le groupe constitué par les groupes 1A jusqu'à VA, les groupes 1B jusqu'à VIIB et le groupe VIII du tableau périodique des éléments ou les mélanges de ces métaux ; y vaut de 0 à 12 ; z vaut de 1 à 12 ; et x représente l'indice d'acidité à chaud.

6. Procédé selon la revendication 1, comprenant les étapes consistant à :

approvisionner un mélange gazeux de fluor élémentaire et de fluorure d'hydrogène ; alimenter le mélange gazeux dans une zone réactionnelle contenant un fluorure acide d'ammonium commercial ;
mettre en contact le mélange gazeux avec le fluorure acide d'ammonium liquide commercial pendant un temps suffisant et dans des conditions suffisantes pour produire du trifluorure d'azote, où l'indice d'acidité réelle à chaud initial du fluorure acide d'ammonium est supérieur à l'indice d'acidité à chaud du fluorure acide d'ammonium liquide commercial ; et
prélever un flux de produit réactionnel comprenant le trifluorure d'azote à partir de la zone réactionnelle.

7. Procédé selon la revendication 6, dans lequel l'indice d'acidité réelle à chaud initial est au moins plus grand d'environ 0,05 à l'indice d'acidité à chaud du fluorure acide d'ammonium liquide commercial dans la zone réactionnelle.

8. Procédé selon la revendication 6, dans lequel l'indice d'acidité à chaud du fluorure acide d'ammonium liquide commercial est inférieur à environ 1,8.

9. Procédé selon la revendication 6, dans lequel la pression partielle initiale du fluorure d'hydrogène dans le mélange gazeux est au moins d'environ 15 kPa à la température et à la pression d'exploitation de la zone réactionnelle.

10. Procédé selon la revendication 6, dans lequel la température d'exploitation de la zone réactionnelle vaut d'environ 120 à environ 150°C, et la pression d'exploitation de la zone réactionnelle vaut d'environ 80 à environ 200 kPa.

11. Procédé selon la revendication 6, dans lequel ladite étape de mise en contact a lieu dans un réacteur agité.

12. Procédé selon la revendication 1, comprenant les étapes consistant à :

approvisionner un mélange gazeux de fluor élémentaire et de fluorure d'hydrogène ; alimenter le mélange gazeux dans une zone réactionnelle contenant un fluorure acide d'ammonium commercial ;
mettre en contact le mélange gazeux avec le fluorure acide d'ammonium liquide commercial qui a un indice d'acidité apparente à chaud inférieur à environ 2,0 pendant un temps suffisant et dans des conditions suffisantes pour produire du trifluorure d'azote, où l'indice d'acidité réelle initial à chaud est supérieur à l'indice d'acidité à chaud du fluorure acide d'ammonium liquide commercial, et où en outre la pression partielle initiale du fluorure d'hydrogène dans le mélange gazeux vaut au moins environ 15 kPa à la température et à la pression d'exploitation de la zone réactionnelle ; prélever un flux de produit réactionnel à partir de la zone réactionnelle, le flux de produit réactionnel comprenant le trifluorure d'azote et le fluorure acide d'ammonium liquide entraîné ;
introduire le flux de produit réactionnel dans une zone de régénération, où la pression d'exploitation de la zone de régénération est inférieure à la pression d'exploitation de la zone réactionnelle de sorte que le fluorure d'hydrogène gazeux soit extrait du fluorure acide d'ammonium liquide entraîné ;
prélever un flux de produit de régénération de la zone de régénération, le flux de produit de régénération comprenant le trifluorure d'azote et le fluorure d'hydrogène ;
introduire le flux de produit de régénération dans une zone de séparation pour séparer le fluorure d'hydrogène du trifluorure d'azote ;
recycler le fluorure acide d'ammonium liquide de la zone de régénération à la zone réactionnelle ; et
recycler au moins une partie du fluorure d'hydrogène séparé dans la zone de séparation en vue d'une utilisation dans le mélange gazeux de fluor élémentaire et de fluorure d'hydrogène.

FIG. 1

Nitrogen trifluoride yield as a function of the $NH_4F(HF)_x$ melt acidity x value with parameters of hydrogen fluoride partial pressure in the fluorine feed

# FIG. 3

Estimated values of $C_1$, $C_2$, and $C_3$ as a function of melt acidity x value $NH_4F(HF)_x$ in batch experiments

**FIG. 2**